# EUROPEAN PATENT APPLICATION

(11) **EP 4 852 106 A1**
(43) Date of publication of application: **09.12.2026**
(21) Application number: 24922517.8
(22) Date of filing: 17.06.2024
(51) Int. Cl.: H01M 8/04082, H01M 8/04089, H01M 8/04111

(54) **GAS DISTRIBUTOR FOR FUEL CELL**

(30) Priority: 31.01.2024 KR 20240015214
(71) Applicant: Terralix Co.,Ltd., Buan-gun, Jeollabuk-do 56332 (KR)
(72) Inventor: JUNG, Hee Seok, Gyeonggi-do 17111 (KR); CHO, Young Sang, Gyeonggi-do 17081 (KR)
(74) Representative: González López-Menchero, Álvaro Luis
(86) International application number: PCT/KR2024/008323
(87) International publication number: WO 2025/164851

(57) **Abstract**

Proposed is a gas distributor for a fuel cell. The gas distributor decompresses high-pressure gas in two stages and supplies same to the fuel cell. The gas primarily decompressed in the first stage is accommodated in an intermediate-pressure buffer tank and is then decompressed to operating pressure by a second-stage decompression units connected to the intermediate-pressure buffer tank, and the gas is supplied to the fuel cell, thus making it possible to configure a fuel cell gas supply system while minimizing an increase in volume and weight, even when it is necessary to supply a large volume of gas.

## Description

### Technical Field

The present disclosure relates to a gas distributor for a fuel cell. More specifically, the present disclosure relates to a gas distributor for a fuel cell configured to decompress high-pressure gas in two stages and to supply the decompressed gas to the fuel cell, wherein the gas primarily decompressed in a first stage is accommodated in an intermediate-pressure buffer tank and decompressed to an operating pressure by a second-stage decompression units connected to the intermediate-pressure buffer tank and is then supplied to the fuel cell, thereby realizing a configuration of a fuel cell gas supply system while minimizing an increase in volume and weight even when a high flow rate of gas is required.

### Background Art

In a regulator used in a conventional fuel cell, as described in the following patent document (see FIG. 1), primary decompression of high-pressure gas is performed in a first stage (for example, decompression from high pressure of 350 bar to 700 bar to a level of 10 bar), and secondary decompression is performed in a second stage to an actual operating pressure for use, and for example, a pressure is adjusted by rotating an adjustment handle within a range of 0 bar to X bar or by setting a specific operating condition (for example, 1 bar) so that a set pressure is maintained within a usable flow rate range.

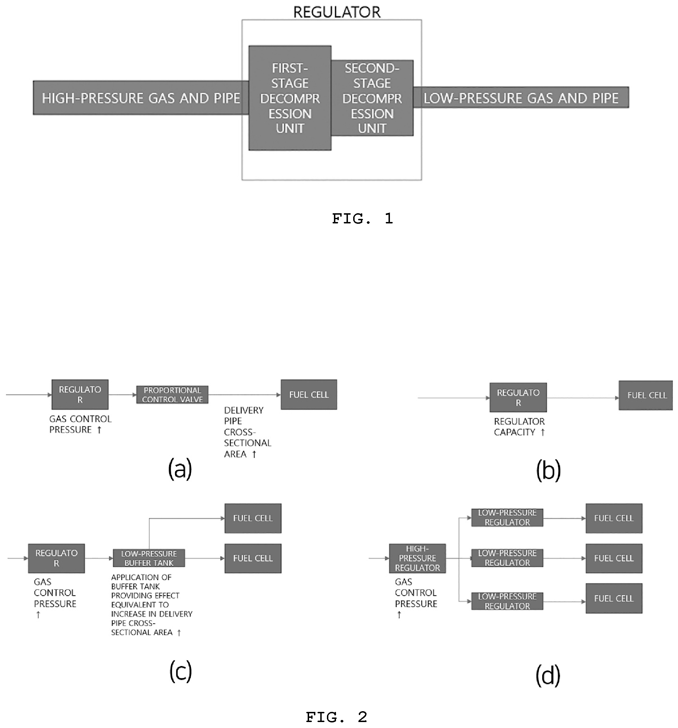

However, when a large flow rate is required at a low operating pressure, as illustrated in FIG. 2(a) to FIG. 2(d), a method in FIG. 2(a) in which a cross-sectional area of a pipe is increased while a flow rate and a pressure is controlled through a proportional control valve is used, a method in FIG. 2(b) in which a capacity of a regulator is increased by modifying an orifice and a pipe design in order to increase a flow rate at a same pressure is used, a method in FIG. 2(c) in which a flow rate is supplemented by collecting low-pressure gas generated from a regulator in a buffer tank having a volume equal to or larger than a predetermined volume is used, or a method in FIG. 2(d) in which a plurality of second-stage regulators is connected in parallel and used is used.

However, modifying an orifice and a pipe design requires time and cost at a level comparable to new development, increasing a cross-sectional area of a pipe or using a low-pressure buffer tank significantly increases volume and weight, and adopting a plurality of second-stage regulators results in issues of pipe complexity, volume, weight, and cost, so that application is difficult to be realized unless a large-scale facility at a power plant level is used, and particularly, application to a small mobility product is difficult to be realized.

(Patent Document) Korean Patent No. 10-2141895 (registered on July 31, 2020) "ELECTRONIC REGULATOR FOR 2-STAGE PRESSURE REDUCTION OF HYDROGEN"

### Disclosure

### Technical Problem

Accordingly, the present disclosure has been made keeping in mind the above problems occurring in the related art.

An objective of the present disclosure is to provide a gas distributor for a fuel cell configured to decompress high-pressure gas in two stages and to supply the high-pressure gas to the fuel cell, wherein the gas primarily decompressed in a first stage is accommodated in an intermediate-pressure buffer tank and decompressed to an operating pressure by a second-stage decompression units connected to the intermediate-pressure buffer tank and then is supplied to the fuel cell, thereby realizing a configuration of a fuel cell gas supply system while minimizing an increase in volume and weight even when a high flow rate of gas is required.

Another objective of the present disclosure is to provide a gas distributor for a fuel cell configured such that a second-stage decompression units are directly mounted on an intermediate-pressure buffer tank, thereby realizing miniaturization and weight reduction of the gas distributor without installation of complicated piping or additional fixing structures even when a high flow rate is secured.

Still another objective of the present disclosure is to provide a gas distributor for a fuel cell configured such that a plurality of second-stage decompression units having a same set pressure and a same flow rate is mounted in an intermediate-pressure buffer tank and is connected to a plurality of fuel cells, thereby minimizing a flow rate difference and a pressure difference supplied to each fuel cell and securing reliability of gas distribution flow.

### Technical Solution

The present disclosure may be implemented by one or more embodiments having some or all of the following configurations, to achieve one or more of the above-described objectives.

According to an aspect of the present disclosure, there is provided a gas distributor for a fuel cell, the gas distributor including: an intermediate-pressure unit configured to primarily decompress gas supplied at a high pressure and transmit the gas; an intermediate-pressure buffer tank configured to accommodate the gas decompressed in the intermediate-pressure unit in a space having a predetermined volume; and a plurality of second-stage decompression units connected to the intermediate-pressure buffer tank and configured to decompress the gas to an operating pressure of the fuel cell and to supply the gas to the fuel cell.

According to another aspect of the present disclosure, the intermediate-pressure unit may include: a high-pressure pipe configured to form a passage through which high-pressure gas is supplied; a first-stage decompression unit configured to primarily decompress the high-pressure gas supplied through the high-pressure pipe; and an intermediate-pressure pipe configured to transmit the gas decompressed by the first-stage decompression unit to the intermediate-pressure buffer tank.

According to still another aspect of the present disclosure, the plurality of second-stage decompression units may be directly mounted on the intermediate-pressure buffer tank at predetermined intervals.

According to yet another aspect of the present disclosure, the intermediate-pressure unit may be configured to decompress gas of 350 atmospheres to 700 atmospheres to a pressure of 10 atmospheres to 30 atmospheres, and the plurality of second-stage decompression units may be configured to decompress the gas to 1 atmosphere to 1.5 atmospheres.

According to another aspect of the present disclosure, the plurality of second-stage decompression units may be connected to a plurality of fuel cells, respectively.

According to another aspect of the present disclosure, each of the plurality of second-stage decompression units may be configured to be set to perform gas decompression at a same pressure and a same flow rate.

According to another aspect of the present disclosure, a number of the plurality of second-stage decompression units connected to each fuel cell may be adjusted according to a required flow rate of the fuel cell.

### Advantageous Effects

The present disclosure may achieve the follow effects from the embodiment and configurations described below, as well as combinations and relationships of use thereof.

In the present disclosure, since the high-pressure gas is decompressed in the two stages and is supplied to the fuel cell while the primarily decompressed gas is accommodated in the intermediate-pressure buffer tank and decompressed to the operating pressure by the second-stage decompression units connected to the intermediate-pressure buffer tank and then the gas is supplied to the fuel cell, there is an effect that the configuration of the fuel cell gas supply system while minimizing an increase in volume and weight even when a high flow rate of gas is required is capable of being realized.

In the present disclosure, since the second-stage decompression units are directly mounted on the intermediate-pressure buffer tank, there is an effect that miniaturization and weight reduction of the gas distributor are capable of being realized without installation of complicated piping or additional fixing structures even when a high flow rate is secured.

In the present disclosure, since the plurality of second-stage decompression units having the same set pressure and the same flow rate is mounted on the intermediate-pressure buffer tank and are connected to a plurality of fuel cells, there is an effect that reliability of gas distribution flow by minimizing a flow rate difference and a pressure difference supplied to each fuel cell is secured.

### Description of Drawings

FIG. 1 is a reference view illustrating a configuration of a conventional regulator.
FIG. 2 shows reference views illustrating examples of methods for securing a high flow rate in the related art.
FIG. 3 shows reference views illustrating examples of a configuration of a gas distributor for a fuel cell according to an embodiment of the present disclosure.
FIG. 4 is a perspective view illustrating the gas distributor for the fuel cell according to an embodiment of the present disclosure.

### * DESCRIPTION OF THE REFERENCE NUMERALS IN THE DRAWINGS

1: intermediate-pressure unit, 11: high-pressure pipe, 13: first-stage decompression unit, 15: intermediate-pressure pipe, 3: intermediate-pressure buffer tank, 5: second-stage decompression unit

### Mode for Invention

Hereinafter, exemplary embodiments of a gas distributor for a fuel cell according to the present disclosure will be described with reference to the accompanying drawings. In the description of the present disclosure, when it is determined that a detailed description of related known technologies or configurations may unnecessarily obscure the subject matter of the present disclosure, the detailed description will be omitted. Throughout the present specification, when a part is referred to as "including" an element, it means that the part may include other elements as well without excluding the other elements unless specifically stated otherwise.

Referring to FIG. 1 to FIG. 4, a gas distributor for a fuel cell according to an embodiment of the present disclosure includes an intermediate-pressure unit 1 configured to primarily decompress gas supplied at a high pressure and to transmit the gas, an intermediate-pressure buffer tank 3 configured to accommodate the gas decompressed in the intermediate-pressure unit 1 in a space having a predetermined volume, and a plurality of second-stage decompression units 5 connected to the intermediate-pressure buffer tank 3 and configured to decompress the gas to an operating pressure of a fuel cell and to supply the gas to the fuel cell.

In a conventional fuel cell, a regulator is used to supply gas such as oxygen and hydrogen required for power generation using the fuel cell. Furthermore, as illustrated in FIG. 1, the conventional regulator is configured to decompress high-pressure gas by a two-stage regulator and to supply the decompressed gas to the fuel cell.

However, when gas having a large flow rate is required to be supplied at a same pressure, as illustrated in FIG. 2(a) to FIG. 2(d), a capacity of a regulator is increased or a cross-sectional area of a pipe is increased, but such configuration causes an increase in volume and weight and requires time and cost for design modification. In addition, even when gas is supplied after storing decompressed gas in a buffer tank in order to increase a flow rate or when gas is supplied by using a plurality of two-stage regulators, there is a problem in that volume and weight of the buffer tank excessively increase and complicated piping, weight, and cost for connecting the plurality of two-stage regulators occur.

Accordingly, in the present disclosure, gas primarily decompressed from high-pressure gas is stored in the intermediate-pressure buffer tank 3, and the plurality of second-stage decompression units 5 is connected to the intermediate-pressure buffer tank 3 so as to decompress the gas to an operating pressure and to supply the gas to the fuel cell, thereby reducing a volume of the buffer tank. Furthermore, by directly mounting the plurality of second-stage decompression units 5 on the intermediate-pressure buffer tank 3, miniaturization and weight reduction of the gas distributor are capable of being realized without additional piping or structures.

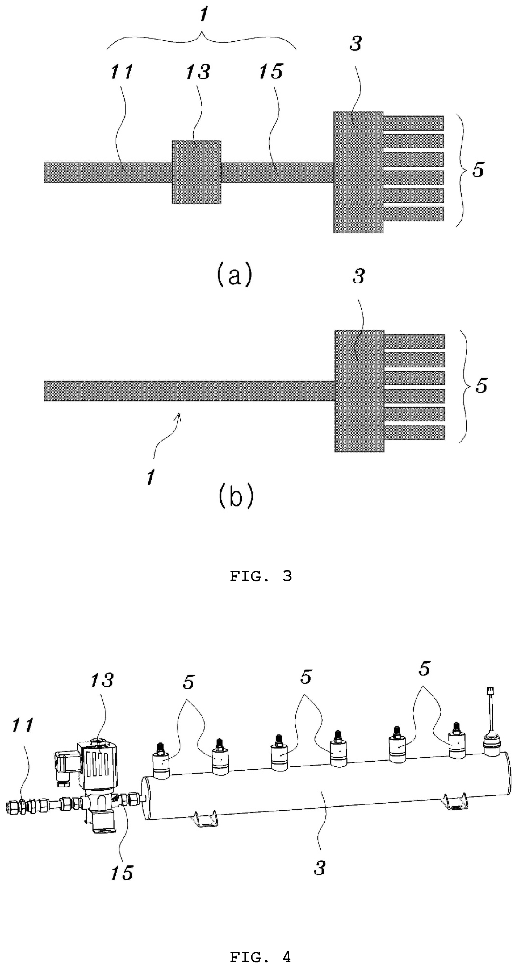

The intermediate-pressure unit 1 is configured to primarily decompress high-pressure gas. For example, the intermediate-pressure unit 1 may decompress the gas at 350 atmospheres to 700 atmospheres to 10 atmospheres to 30 atmospheres. As illustrated in FIG. 3(b), the intermediate-pressure unit 1 may be configured to receive gas decompressed from a separate device. However, as illustrated in FIG. 3(a), it is preferable that the intermediate-pressure unit 1 includes a high-pressure pipe 11, a first-stage decompression unit 13, and an intermediate-pressure pipe 15 so that direct decompression is performed.

The high-pressure pipe 11 is configured to form a passage through which high-pressure gas is supplied, and may be configured to receive high-pressure gas of 350 atmospheres to 700 atmospheres from a separate storage medium (not illustrated) storing high-pressure gas.

The first-stage decompression unit 13 is connected to the high-pressure pipe 11 and is configured to primarily decompress high-pressure gas supplied through the high-pressure pipe 11. For example, the first-stage decompression unit 13 may be configured to decompress the gas to 10 atmospheres to 30 atmospheres. The first-stage decompression unit 13 may employ a general regulator configured to reduce a pressure of gas, and is connected to the intermediate-pressure pipe 15 and configured to supply decompressed gas to the intermediate-pressure buffer tank 3.

The intermediate-pressure pipe 15 is configured to form a passage through which gas decompressed by the first-stage decompression unit 13 is supplied to the intermediate-pressure buffer tank 3, and is formed between the first-stage decompression unit 13 and the intermediate-pressure buffer tank 3.

The intermediate-pressure buffer tank 3 is connected to the intermediate-pressure pipe 15 and is configured to accommodate gas primarily decompressed in the intermediate-pressure unit 1, and a size of the intermediate-pressure buffer tank 3 may be determined according to a flow rate required in a fuel cell. The plurality of second-stage decompression units 5 is connected to the intermediate-pressure buffer tank 3 so that decompressed gas is capable of being supplied to a plurality of fuel cells. Accordingly, the intermediate-pressure buffer tank 3 is formed between the first-stage decompression unit 13 and the second-stage decompression units 5 to secure a flow rate, and gas stored in the intermediate-pressure buffer tank 3 is decompressed to the operating pressure of the fuel cell by each of the second-stage decompression units 5 and then supplied, thereby reducing a volume of the buffer tank by a ratio of (secondary decompression pressure / primary decompression pressure) as compared to a case in which gas having completed two-stage decompression is stored and supplied. For example, when high-pressure gas is decompressed to 10 atmospheres in the first-stage decompression unit 13 and is decompressed to 1 atmosphere in the second-stage decompression units 5, a size of the intermediate-pressure buffer tank 3 may be reduced to 1/10 as compared to a case in which a buffer tank is mounted at a downstream side of the second-stage decompression units 5. Particularly, the second-stage decompression units 5 is directly connected to and mounted on the intermediate-pressure buffer tank 3, thereby realizing configuration of the gas distributor having minimized volume and weight without any separate piping or additional structures.

The second-stage decompression units 5 are connected to the intermediate-pressure buffer tank 3 and are configured to decompress gas primarily decompressed to the operating pressure of the fuel cell, and a general regulator configured to reduce a pressure of gas may be employed. For example, when gas of 350 atmospheres to 700 atmospheres is decompressed to 10 atmospheres to 30 atmospheres in the first-stage decompression unit 13, the second-stage decompression units 5 may be configured to reduce the pressure of the gas to 1 atmosphere to 1.5 atmospheres according to the operating pressure of the fuel cell. Particularly, as illustrated in FIG. 4, the second-stage decompression units 5 may be directly mounted on the intermediate-pressure buffer tank 3, thereby eliminating a need for separate piping and structures. The plurality of second-stage decompression units 5 may be connected to a plurality of fuel cells, and a constant flow rate of gas may be supplied to each of the plurality of fuel cells. Here, the plurality of second-stage decompression units 5 is configured to decompress gas at a same pressure and to supply gas at a constant flow rate, so that a gas flow rate is accurately distributed and supplied to the fuel cell, thereby securing reliability of gas flow rate distribution. In addition, while the plurality of second-stage decompression units 5 is connected to the plurality of fuel cells, in some cases, a plurality of second-stage decompression units 5 may be connected to one fuel cell according to a flow rate of gas required by the fuel cell. Accordingly, gas having a constant pressure may be supplied to a specific fuel cell while increasing a flow rate, and such gas supply may be accurately performed with a simple configuration.

As described above, the applicant has described various embodiments of the present disclosure, but such embodiments are only one embodiment that implements the technical idea of the present disclosure, and any change or modification should be construed as falling within the scope of the present disclosure as long as the technical idea of the present disclosure is implemented.

## Claims

1. A gas distributor for a fuel cell, the gas distributor comprising:
an intermediate-pressure unit configured to primarily decompress gas supplied at a high pressure and transmit the gas;
an intermediate-pressure buffer tank configured to accommodate the gas decompressed in the intermediate-pressure unit in a space having a predetermined volume; and
a plurality of second-stage decompression units connected to the intermediate-pressure buffer tank and configured to decompress the gas to an operating pressure of the fuel cell and to supply the gas to the fuel cell.

2. The gas distributor of claim 1, wherein the intermediate-pressure unit comprises:
a high-pressure pipe configured to form a passage through which high-pressure gas is supplied;
a first-stage decompression unit configured to primarily decompress the high-pressure gas supplied through the high-pressure pipe; and
an intermediate-pressure pipe configured to transmit the gas decompressed by the first-stage decompression unit to the intermediate-pressure buffer tank.

3. The gas distributor of claim 1, wherein the plurality of second-stage decompression units is directly mounted on the intermediate-pressure buffer tank at predetermined intervals.

4. The gas distributor of claim 2, wherein the intermediate-pressure unit is configured to decompress gas of 350 atmospheres to 700 atmospheres to a pressure of 10 atmospheres to 30 atmospheres, and the plurality of second-stage decompression units is configured to decompress the gas to 1 atmosphere to 1.5 atmospheres.

5. The gas distributor of claim 1, wherein the plurality of second-stage decompression units is connected to a plurality of fuel cells, respectively.

6. The gas distributor of claim 5, wherein each of the plurality of second-stage decompression units is configured to be set to perform gas decompression at a same pressure and a same flow rate.

7. The gas distributor of claim 6, wherein a number of the plurality of second-stage decompression units connected to each fuel cell is adjusted according to a required flow rate of the fuel cell.
